# EUROPEAN PATENT SPECIFICATION

(11) **EP 0 684 716 B1**
(45) Date of publication and mention of the grant of the patent: **27.02.2002**
(21) Application number: 94480048.1
(22) Date of filing: 25.05.1994
(51) Int. Cl.: H04L 12/56, H04L 29/14

(54) **A data communication network and method for operating said network**
Datenübertragungsnetz und Verfahren zum Betreiben des Netzes
Réseau de communication de données et procédé d'opération de ce réseau

(43) Date of publication of application: 29.11.1995
(73) Proprietor: International Business Machines Corporation, Armonk, N.Y. 10504 (US)
(72) Inventor: Pruvost, Alain, F-06220 Vallauris (FR); Bertin, Olivier, F-06200 Nice (FR); Chobert, Jean-Paul, F-06510 Carros (FR)
(74) Representative: de Pena, Alain

(56) References cited:
- EP-A- 0 404 423
- IBM TECHNICAL DISCLOSURE BULLETIN., vol.35, no.1B, June 1992, NEW YORK US pages 16 - 18 'DISTRIBUTED TREE MAINTENANCE'
- IBM TECHNICAL DISCLOSURE BULLETIN., vol.35, no.1A, June 1992, NEW YORK US pages 93 - 98 'DISTRIBUTED TREE MAINTENANCE'

## Description

### Background of the Invention

This invention generally deals with data communication networks and more particularly with a so-called Spanning Tree organized architecture enabling network operation in a number of situations including fast path determination and fast spanning tree recovery, on an optimized manner, and a method for doing the same. More specifically, the invention deals with a method and means for dynamically organizing each spanning tree node architecture to fully reflect the tree topology, as well as a method and means for using said organized nodes architecture to implement network operations such as fast path determination or fast spanning tree recovery, for instance. But the specific node organization is also very useful in a number of other situations that may occur, and do in fact occur, during conventionnal operation of the data communication network.

European Patent 0 404 423 describes a mesh connected local area network providing automatic packet switching and routing between host computers coupled to the network. The network has a multiplicity of cut-through, nonblocking switches, each capable of simultaneously routing a multiplicity of data packets. Whenever a new switch or link is added to the network, and whenever a switch or link fails, the switches in the network automatically reconfigure the network by recomputing the set of legal paths through the network.

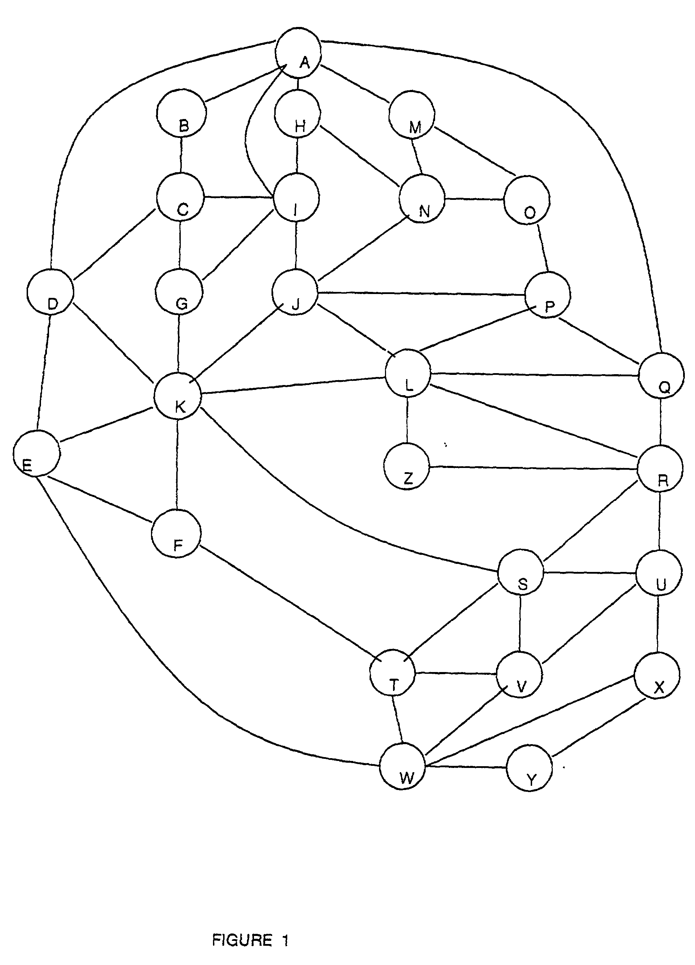

Figure 1 illustrates a data network comprising a number of nodes A through Z.

As represented in the figure, the network nodes are interconnected by links for enabling the transmisssion of data packets and other signals such as control data, between nodes. Each link of the network connects together two neighboring nodes. Preferably each link of the network, in fact, comprises a pair of unidirectionnal links or link segments ; and each such pair of links can be realized by a single communication medium, such as an optical fiber, or by two separate communication mediums, such as a pair of coaxial cables or optical fibers.

Obviously, such an organized network structure enables communicating data between any pair of nodes including a so-called source node and a so-called target node. Those source and target designations are naturally, dynamically varying according to the direction of the traffic, which adds to the already complex network architecture as represented in the figure, to show the complexity of the network operation in terms of data and control traffics. For instance, data or traffic control packets might be routed accidentally into a loop-interconnected set of nodes, which obviously would lower the network throughput, or more generally speaking disturb the traffic.

An optimized network reorganization which might in some instances be devoted to control traffic, has already been disclosed in the art, which reorganization leads to a so-called Spanning Tree architecture.

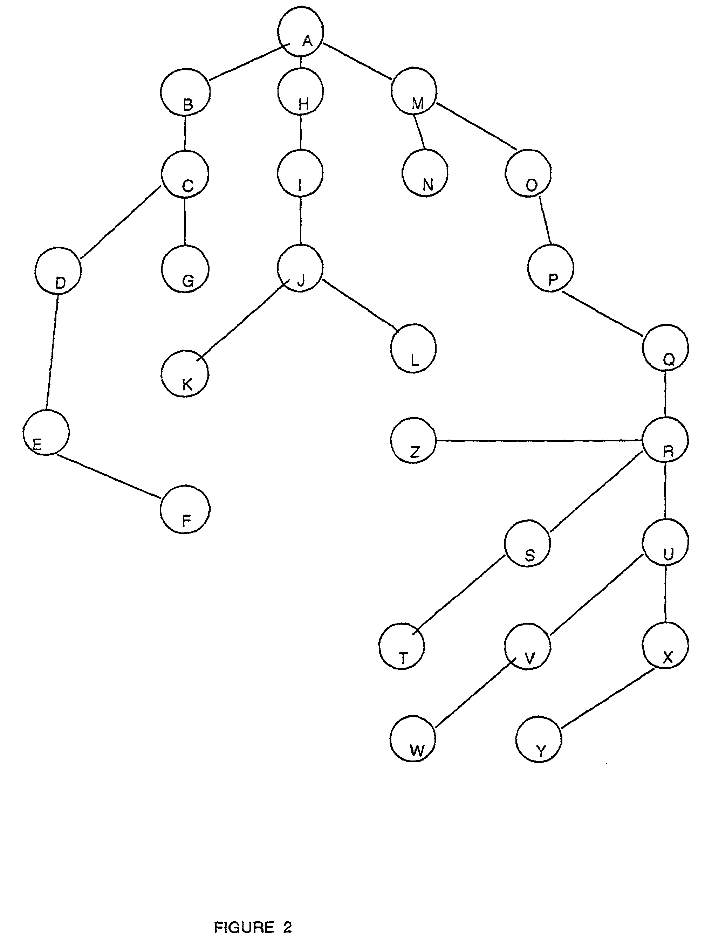

Represented in figure 2 is a spanning tree, i. e. an optimal structure, that enables the efficient transmission of a message (e. g. data or control) from and to any node of the communication network. The spanning tree contains the mininum number of links such that the network is still connected and yet has no cycles or loops. Thus, it is a good medium for broadcasting data and/or control packets. The links may be considered as extending outward from one node (e. g. node A in figure 2) referred to as the root node. The outer nodes of the spanning tree (e. g. node F, node G, node K, node L, node N, node Z, node T, node W and node Y) are referred to as leaf nodes. The nodes between the leaf nodes and the root node are referred to as intermediate nodes. It should be noted that, in the structure of the network of figure 2, any one of the nodes A through Z might be readily considered as the root node of the spanning tree in a specific tree representation for each case.

In such a tree structure, the root node known as such by the other network nodes, i. e. children nodes, is designated through a so-called rootship procedure using both hardware and software means distributed within the network. The links connecting pairs of nodes of the spanning tree are sometimes referred to as "edges".

The root node is also referred to as the parent node of the nodes directly connected to it, and all the nodes connected to the root node, directly, are referred to as children nodes of the root node. Also, in an outward progression along the tree stucture, each node that is directly and outwardly connected to another node is referred to as the child node of the latter node, and that latter node is referred to as the parent node of the former node. Thus, for instance, with the spanning tree stucture shown in figure 2, node A is the parent of nodes B, H and M ; node B is the parent of node C ; node C is the parent of nodes D and G. Conversely nodes D and G are both children nodes of node C. In other words, given a spanning tree stucture, the root node is the only node with no parent node. Apart from this characteristic, the root node needs having almost no other hardware or software means not available to any other node of the spanning tree. Consequently, any one of the nodes A through Z may operate as the root node at a given moment.

Obviously, under normal operating conditions several situations may occur that need spanning tree reorganizations. For instance a new link may require being set for optimizing the traffic, like for instance for replacing a low speed or low capacity link by a higher speed or higher capacity one or just for setting a new communication between nodes. Such a link replacement should, naturally, be operable as fast as possible to avoid any traffic jam or avoid an even worh situation.

Also, assuming a terminal attached to one node requests access to a CPU (Central Processing Unit) attached to another node, the system should provide a simple and fast path selection procedure between those two nodes of the transport network using edges of the spanning tree. Again, the faster the path is set, the better in terms of network operation.

In addition, given the importance of the traffic in modern data networks, any failure (e. g. link failure) would isolate a portion of the spanning tree and completely paralyze the traffic therein, if not worse, i. e. paralyze the whole data network operation. These situations have already been considered in the prior art but the solutions proposed are not considered fully satifactory in terms of time required for reorganizing the spanning tree. One obviously may understand how dramatic such link failure consequences may be, just by assuming a new link failure might occur prior to the first one being set. The traffic might then be completely paralyzed, which in terms of losses (e. g. money losses) might be terrible.

Just imagine this kind of situation in a multimedia environment.

Accordingly, any good solution to those problems and others, particularly if requiring not costly means to be implemented, would be most welcomed by the data traffic industry and even by users. This is exactly what the present invention is meant for.

### Objects of the Invention

One object of the present invention is to provide a data communication network architecture and more particularly a derived spanning tree architecture enabling fast spanning tree, node operation or tree reorganization under most operating conditions.

Another object of this invention is to provide a node organization and corresponding means for enabling self node setting after any tree modification.

Still another object of this invention is to provide a method and means for fast setting of a requested path between two nodes of the spanning tree.

A further object of this invention is to provide a method and means for reorganizing the spanning tree under a number of conventional operating conditions, including the case of link failure, and this, fairly rapidly.

Another object of this invention is to provide a method and corresponding means for enabling fast spanning tree recovery even in case of multiple link failures.

### Summary of the Invention

These objects are achieved by a data communication network including several nodes interconnected by bi-directionnal links for enabling the transmission of data packets and control data between the nodes, said nodes being at any given moment interconnected into a spanning tree arrangement including, a root node and children nodes outwardly organized in a parent-children relationship, with each node (except the root node) having one single parent node, the spanning tree being characterized in that each node is provided with storage means for storing into a so-called topology database including a Parent Table, all the nodes of the tree, with each node (but the root node) pointing to its parent node and to a Link Table via out-link pointers, the Link Table including dual link pointers for pointing to respective dual links within the Link Table and means for assigning each link reference with a bit position indicating whether said link currently participates to the spanning tree or not; means for using the Parent Table and Link Table contents for organizing the tree arrangement at will; and means for dynamically updating the node topology database including the Parent Table and the Link Table upon each spanning tree (re)organization.

These and other objects, characteristics and advantages of the invention will become apparent from a consideration of the following detailed description given with reference to the accompanying drawings, which specify and show preferred embodiments of the invention.

### Brief Description of the Drawings

Figure 1is a schematic illustration of a conventional data network wherein the present invention would be implemented.

Figure 2 is a schematic representation of a so-called spanning tree derived from the data network of figure 1 and to be provided with means for implementing the invention.

Figure 3 is a schematic representation of a network tree for multicast operation.

Figure 4 is a schematic representation of the hardware involved in the operation of one of the nodes of the network tree of figure 3.

Figure 5is a schematic representation of a node organization made to support the invention.

Figure 6 and 7 (including figure 7.1 through 7.3) are flow charts made for implementing the invention.

### Detailed Description of a Preferred Embodiment of the Invention

The following description shall be based on a general data network as represented in figure 1 wherein, at a given considered moment, certain links might be operating while others are not. The corresponding spanning tree is the one represented in figure 2 with those edges connecting the nodes A through Z at the given considered moment.

It should be already mentioned, and this is obvious to any man skilled in the art of data communication networks, that the network representations of both figures 1 and 2 are just given to illustrate this invention and should in no way be considered as limitating the scope of this invention. The networks may be more complex or simpler in practice.

Also the distances between nodes may vary from relatively small distances, to relatively large distances (e. g. thousands of kilometers).

It should also be understood that terminals (not represented) including both conventional data terminals and mainframes or CPUs are attached to given nodes to request and control data traffic using conventional log-on procedures. Those procedures will not be described herein as they do not directly participate to the invention.

Finally, the network nodes and links are not necessarily equivalent to one another in terms of power, speed traffic capacity, etc... but this does not interfer with, or affect, the invention.

Also, parent, child and root relationships are defined as described above and the spanning tree representation may, and probably shall, vary throughout the time, with anyone of the nodes becoming the spanning tree root.

As already mentioned, data and control informations are to be routed throughout the network. Those informations, generally referred to as data including both pure data and control data, are individually organized into a conventional packet stucture, each packet including a so-called header section including routing information (address) to be used by the network to vehiculate the'considered packet, throughout the network, from a source point to an assigned target point, via network links and nodes.

Some packets may be broadcasted or multicasted to several nodes. In other words, the multicast routing node enables sending a packet from one node to several receiver nodes simultaneously. The sending node and the corresponding receiving nodes do act as a multicast tree. One may consider that a tree address is associated to a multicast tree once said tree has been defined. The various network nodes specify which of their associated links (defined in terms of links ownerships) are on the multicast tree by setting the appropriate tree address in the link hardware.

Packets transmitted in the network contain a tree address in their routing header. Those packets are propagated in the network only on links part of the multicast tree and having the right tree address set, in their hardware.

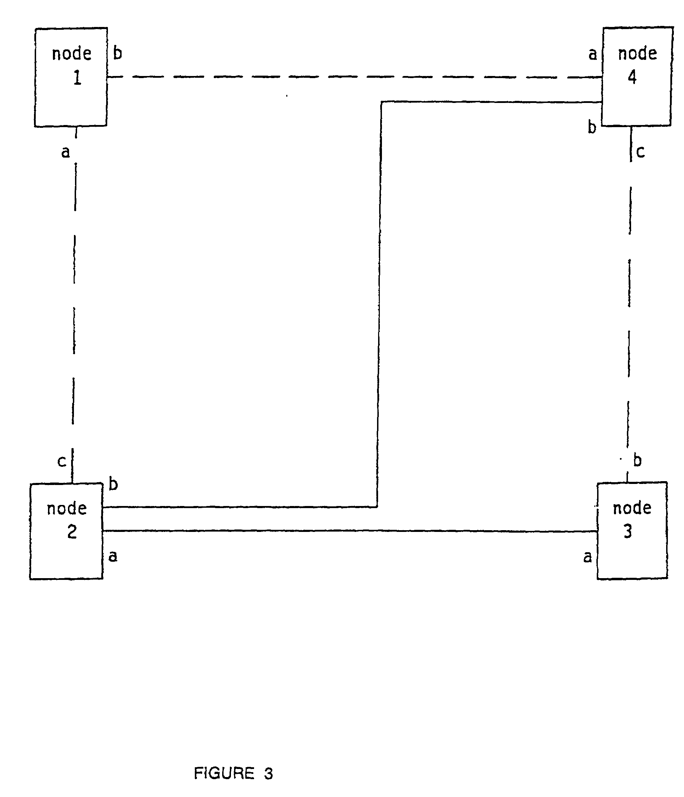

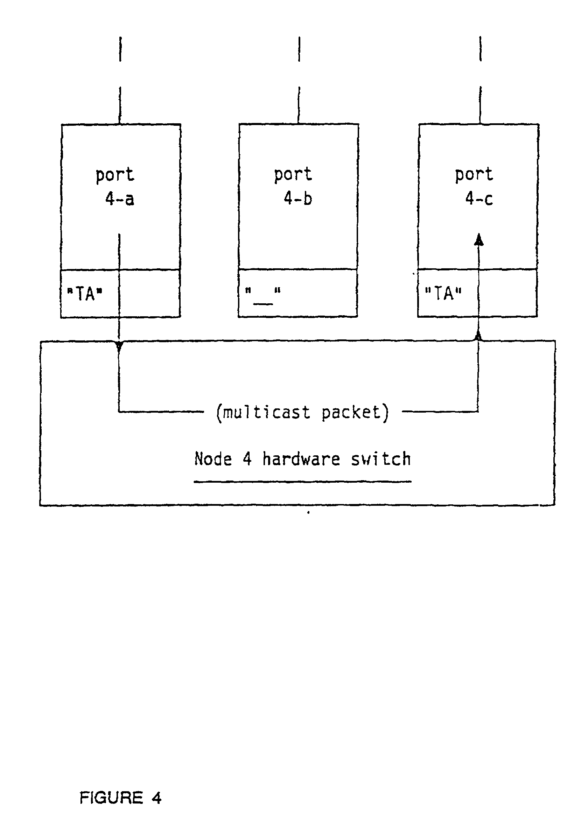

An example of multicast tree organization and multicast routing is illustrated in both figures 3 and 4.

Represented in figure 3 is a network including four nodes labelled node 1, 2, 3 and 4 respectively. Those nodes are interconnected by physical links, each link consisting of two unidirectional links. Each unidirectional link is defined by (one may say "belongs to") its origin node. Conversely, the node is said to "own" links.

Accordingly :
Node 1 owns two links : links 1-a and 1-b,
Node 2 owns three links : links 2-a, 2-b and 2-c,
Node 3 owns two links : links 3-a and 3-b,
Node 4 owns three links : links 4-a, 4-b and 4-c.

As represented in figure 3, the link 4-a is said to be the dual link of link 1-b, with both links forming a complete physical link between Node 1 and Node 4.

A multicast tree is organized with the above considered four nodes interconnected by the dotted links (This is but one possible representation). Said multicast tree is defined by a preassigned tree address "TA". When node 1 sends a packet with the address TA in its routing header section, said packet is automatically sent on link 1-a and link 1-b, then routed from node 4 to node 3 via link 4-c. Only those links that are part of the multicast tree do propagate the considered packet. Finally, the packet from node 1 has indeed been broadcasted to nodes 2, 3 and 4 via the multicast tree as required.

Figure 4 shows a schematic representation of a switching hardware supporting the multicast tree "TA" in node 4. The node 4 is provided with a number of ports corresponding to each link attached to node 4, i. e. port 4-a, port 4-b and port 4-c. Each port is provided with its buffer storing the multicast tree address and a packet is only multicasted through those ports supporting the considered packet whose header does carry a corresponding tree address, except the port acting as input port.

In other words, when a packet carrying "TA" in its routing header is received in node 4, the node internal switch hardware gives a copy of said packet to all links marked as being part of the "TA" multicast tree, except the link from which the packet arrived on the node. In the represented case, the packet is forwarded to link 4-c.

A Spanning Tree (ST) may, under certain operating conditions act, as one example of multicast tree that joins all the nodes in a network (see figures 1 and 2). Any packet sent by a node and carrying the Spanning Tree address in its routing header section, shall automatically be sent to all other nodes of the network by using the above described multicasting process and hardware.

This mechanism is particularly useful to propagate Network Control messages that must reach quickly all network nodes without being broadcasted on each and every link of the original data communication network in which case they would be received more than once by each node. The spanning tree insures therefore that a message sent by a sender node part of the spanning tree is received only once by each receiver node belonging to the spanning tree.

Given the above considerations, the spanning tree operation would operate more or less rapidly, and more generally speaking in a more or less optimized manner depending on the provided additional node architecture.

In the present invention, each node has been provided with means for setting a full spanning tree representation or topology database and means for dynamically readjusting this full topology representation in a very fast manner. To that end, each node is provided with software means, which, using conventional and preexisting processor means and random access memory means, as well as hardware and logic of figure 3 and 4 as already described, do organize and maintain the node with said spanning tree full representation to enable optimal operation of the network.

More precisely, each node is provided with a Control Point Adapter logic including control unit and random access memory means wherein a topology database will be stored. The Topology DataBase shall list the network nodes, with each node designating a parent node for the actual spanning tree representation and an out-link pointer pointing to an Outlink Table. Said Outlink Table will, in turn, include Dual Link pointers pointing to a Dual Link Table as well as a bit position (ST bit) indicating whether the considered link is, actually, on the Spanning Tree (ST) or not.

For instance, let's assume we consider Node C. Said node will include as does each other node, a so-called Parent Table (NODE Table or List) stored therein. Said table shall list in NODE LIST form, Node A, Node B, Node C, Node D, ..., Node Z (i. e. all network nodes). Each node will point to a parent node. Each node will also point to a first or out-link table. For instance, Node C shall point to a list including CB, CD, CG and CI (those same links are linked together with CB pointing to CD, CD pointing to CG and CG pointing to CI.

Also mentioned in said first table are indications as to whether the considered link belongs to the actual spanning tree or not. As mentioned a single bit (ST) will do the job. If said ST bit is set to the binary value "1", this indicates that said link belongs to the spanning tree. Otherwise, should ST be reset to "0", the link would be off the tree. Actually, given the representation of figure 2, ST = 1 for links CB, CD and CG, and ST = 0 for CI.

Now, each link of first table points to a second list or dual link table. For instance, CB shall point to a list including BC, BI, BA and BD. Obviously, due to the duality context BC in the second table shall include a pointer pointing back to CB in the first list. Said second list also mentions whether each link is on the spanning tree or not. ST bit is accordingly set to "1" in front of BC and BA, while it is at the binary value zero in front of BI and BD.

Then each link within said second list points to a third dual list. For instance BA shall point to a third list including AD, AB, AI, AH, AM, AO and AQ. The following links in said third list will show an ST bit set to the binary value 1, i. e. AB, AH and AM, while ST = 0 for the remaining links.

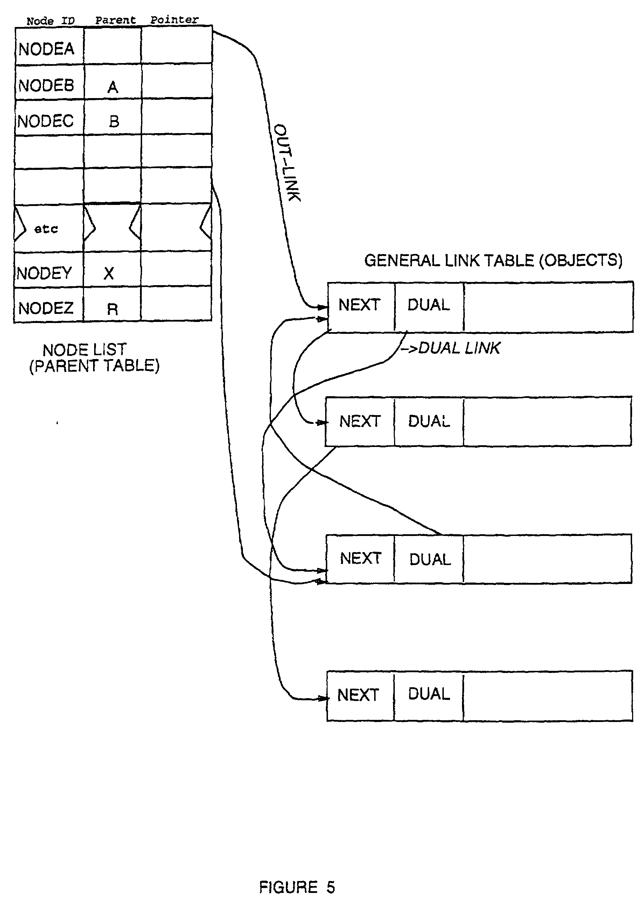

And so on until the network has been entirely described. (All these link tables or lists may, in practice be combined into a single LINK TABLE). In fact, said representation is node dependent as it is conceived as seen from the considered node, but also each node includes a full tree representation including each and every node parentship. Those tables might in fact be combined into a topology database schematically represented in figure 5.

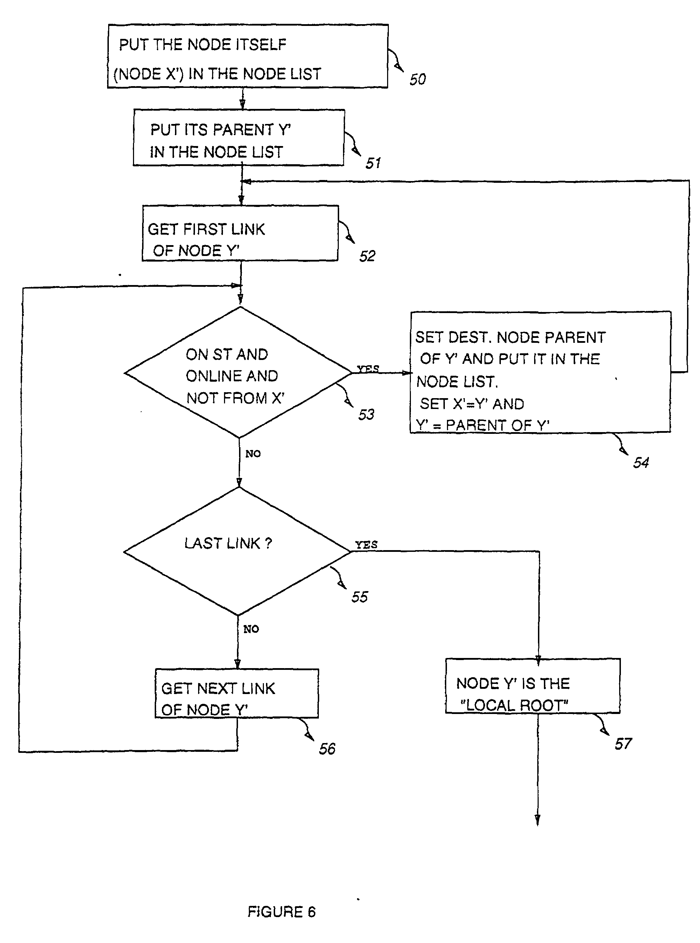

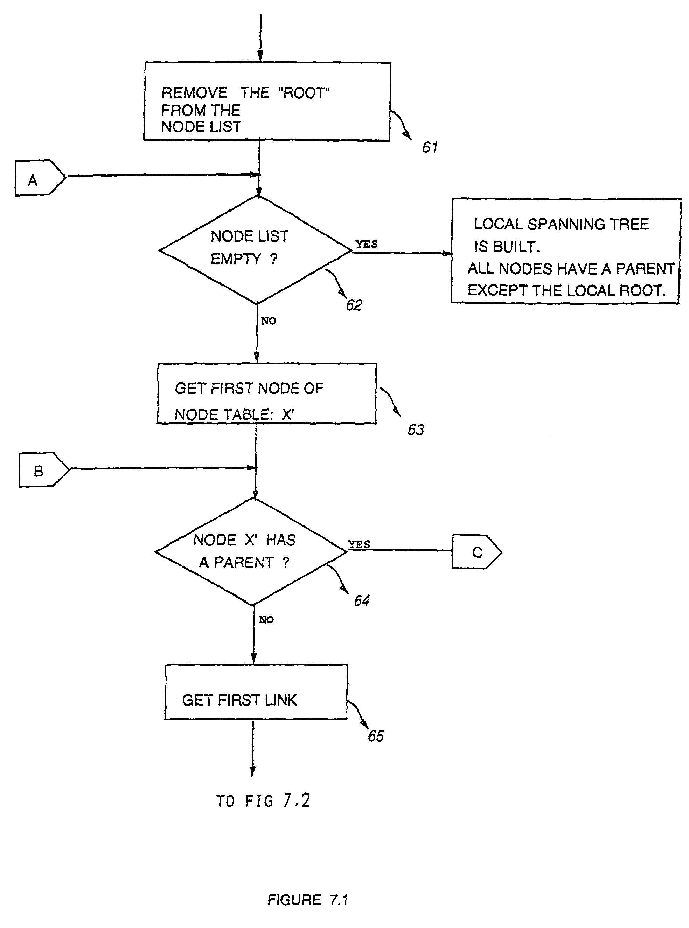

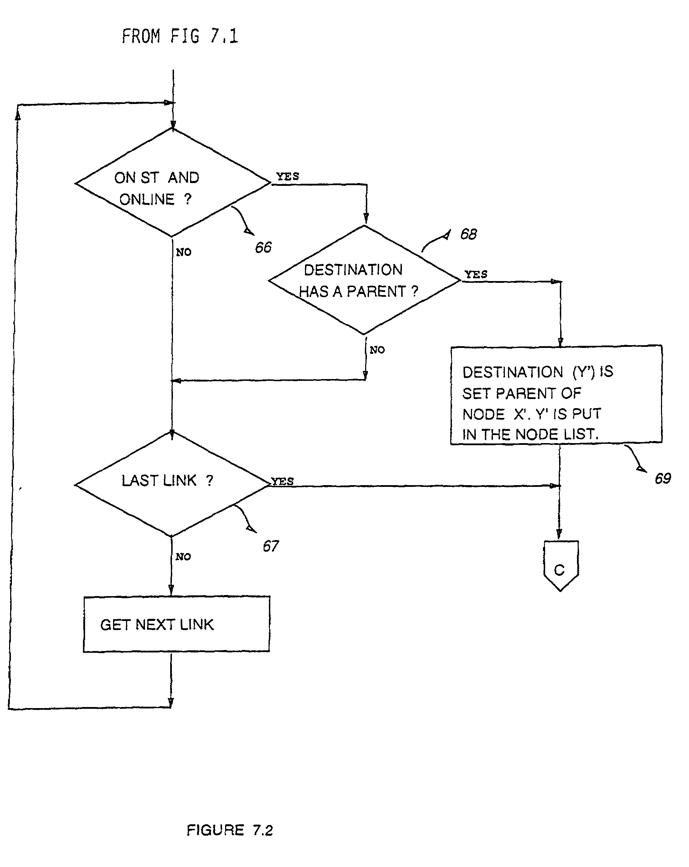

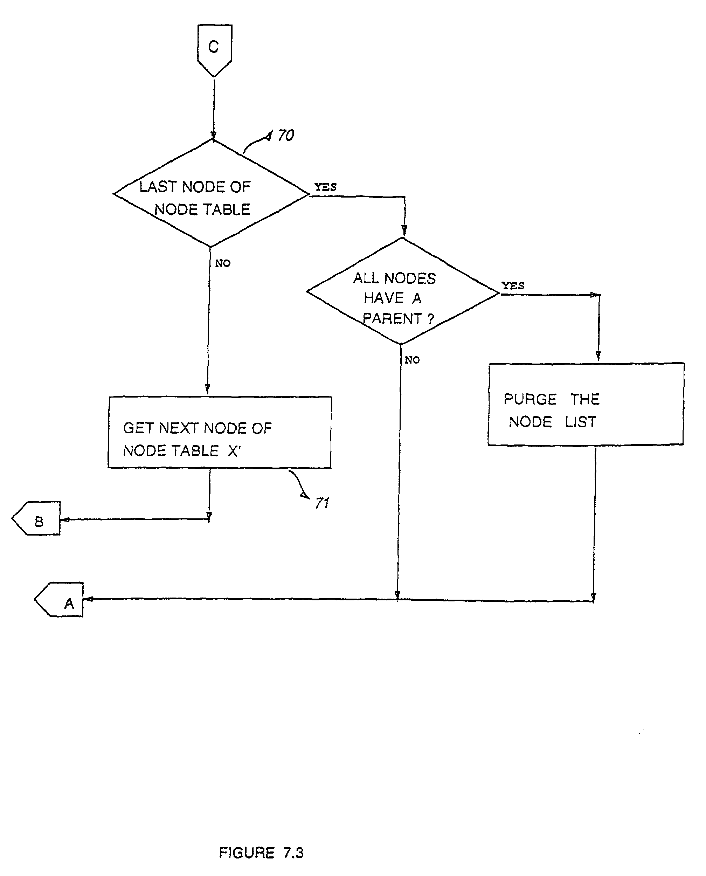

Represented in figure 6 and 7 are flow charts for building a local Spanning Tree representation. Figure 6 describes how to determine the root of the local image of the Spanning Tree. The local root is the first terminal node (node with no child node) encountered when selecting successive parents.

Let's assume one is sitting in a given node X'. The process starts with step 50 whereby the given node X' is itself recorded into the NODE LIST. Then, in step 51, the corresponding parent node Y' is put into the NODE LIST. The system then gets first link of Node Y' (step 52) and initiates a test on said link (step 53) to check whether it is on the Spanning Tree, on-line and not coming from X'. Should the result of the test of step 53 be positive, the destination Node is set parent of Y' and recorded in the NODE LIST. X' is set equal to Y' and new Y' is made parent of Y' (step 54). The process then loops back to step 52.

Should, on the contrary, the test of step 53 be negative, a second test is performed (step 55) to determine whether the considered link was the last link for said node. Should the answer to the test performed in step 55 be negative. The system then considers next link of node Y' (step 56). Otherwise, the process proceeds to step 57 and said Node Y' is recorded as being the local root.

The process then goes to figure 7 representing the algorithm for scanning the Node Table and Database to update the corresponding parent information. The Root is first removed from the NODE LIST (step 61), and a test is performed to check whether the NODE LIST is empty (step 62). Should this be the case, the Local Spanning Tree is fully described, with all nodes but the local root, having a parent node defined and recorded. Otherwise, the process reads the first node of the NODE TABLE (e. g. Node X') (step 63) and a test is performed to check whether said NODE X' has got a parent node (step 64). Should the answer to this test be negative, the process gets a first link (step 65) and tests whether said link is on the Spanning Tree (ST = 1) and on-line (step 66). If the answer to test of step 66 is negative, a test is performed (step 67) to check whether the considered link was the last link to be considered. If this is not the case, the next link is considered and the process loops back to step 66. In case of positive answer to the test of step 66, the system examines whether the destination node has a parent (step 68) and if not, the system proceeds with test 67. Other-wise, the destination node (say Y') is set as being the parent of node X', and Y' is recorded into the NODE LIST (step 69). Should the results of either tests 64 and 67 be positive, and upon completion of the operations of step 69 as well, another test (step 70) is performed to check whether the considered node was the last node to be scanned in the NODE TABLE.

In case of negative answer to this last test, the system proceeds with scanning the NODE TABLE to consider its next recorded node (step 71) and loop back to step 64. Otherwise, the system checks whether all nodes have got a parent (step 72), and if not, loop back to step 62, otherwise purge the NODE LIST and loop back to same step 62.

Obviously, given the flow charts of figures 6 and 7 any man skilled in the art of programmation will straightforwardly derive a programm in an adequate programming language given the system (e. g. processors) characteristics, without needing any inventive effort to do so.

As already mentioned, the full local tree representation provided by this invention improves the network and Spanning Tree operations in a number of critical situations, by greatly simplifying and speeding-up the resolution of any corresponding problem.

For instance, and simply stating, let's consider the case where a path is to be quickly determined between a so-called source node and a so-called target node, using only the Spanning Tree edges (links). A Fast Path Determination is initiated by the system. This operation shall, here, be performed by exploring the source node topology database, up to the root node, for both the source node and the target node, list all target's parent nodes until the root node, list all source's parent nodes up to the root node. The first common node on the two lists will be used to define the path.

For example, let's assume the source node Z wishes to establish the Spanning Tree path toward target node X.

The logic set within node Z will scan the local Table and establish the following lists (see figure 2) :
source-parent-list = Z, R, Q, P, O, M, A.
target-parent-list = X, U, R, Q, P, O, M, A.

Then the system proceeds with a reverse scanning of both lists above, deleting all common nodes but the last. Consequently, on both lists, A is first deleted, then M, O, P and Q. The last common node being R, Node Z will set the path looked for and define it in a control message, as being Z, R, U, X by locally scanning the remaining source list forward and target list backward.

But the present invention is even more important in situations wherein a link happens to brake and the Spanning Tree should recover (be redefined) very fast. To understand how dramatic this situation may be, just consider coñncident edge ruptures within the tree, or even successive ruptures happening fast enough to occur before the tree is redefined after any given said ruptures. Needless to emphasize the whole mess that could derive from such a situation leading to the network being almost completly down and inoperative.

With the full tree representation provided by this invention, with said topology databases into each node, the system shall recover faster than with most known systems.

The following will illustrate the invention operating a fast spanning tree recovery. To fully apprehend the problem, one should realize that the distributed tree maintenance algorithm disclosed above defines a unique mode node called the root. The root centralizes and coordinates most of the maintenance of the spanning tree.

When an edge failure occurs, the original spanning tree is now partitioned into two trees. A node that was child before the failure now becomes a root (node with no parent) of a newly created tree partition. With the means already provided in each node, i. e. full tree description, each partition may try to recover a spanning tree partition, particularly when knowing, in addition, the failing edge. But ultimately the two partitions should merge into a unique tree again to recover from the failure. But in order for the two partitioned trees to merge, their respective roots must agree on the same edge that is eligible for interconnecting them.

A method for updating a spanning tree after network topology changes (link and node failures and recoveries) was described by Israël Cidon, Inder S. Gopeel, Shay Kutten and Marcia Peters, in the IBM Technical Disclosure Bulletin, Vol 35 No 1A, June 1992, pages 93-398, with title "Distributed Tree Maintenance". In that disclosure, the topology maintenance algorithm ensures that nodes on a tree eventually know the topology of their neighboring edges. Agreement between root nodes for interconnecting is ensured through a property called "weight" assigned to all network edges in a unique manner, such that they can be strictly ordered. For two trees to merge, each tree's root must agree on the non-tree edge between them, with the lowest weight. Then the root moves from one node to another via a reliable point to point message called Move-Root. The only node that can send Move-Root is the current root. Upon sending the Move-Root message, the current root is not longer the root. The receiver of Move-Root becomes the next root. The topology update and tree maintenance algorithms are interdependent, in that the current root considers all the edges in the network to determine where to move the root.

The full knowledge of tree topology, and more particularly the knowledge of nodes parentships in each node as provided by this invention combined with the Fast Path determination derived therefrom, as described above, enables faster tree recovery. This process named Fast Spanning Tree Recovery to be initiated by the system shall be described hereunder and illustrated in one example.

Assume the edge BC fails. The original tree (see figure 2) is now partitioned into two trees, the original one (Tree (A)) excluding nodes C, G, D, E and F, and a new tree including only those nodes C, G, D, E and F. Assuming by definition, the child node on failing edge, that is node C, is set the root (self rootship setting), by definition, for the tree including nodes C, D, E, F, G, this second tree may be labelled Tree (C).

The process for merging the two partitions, i. e. Tree (A) and Tree (C) starts with Node C scanning its topology database.

Said database is represented schematically hereunder and show the Parent Table and the Link Tables which in fact could be easily combined into a single Link Table.

The Parent Table in Node C lists all the network nodes with, in front of each node, the corresponding parent node. Thus, prior to the link failure, Node A being the root shall be parentless. Node B's parent is A, Node C's parent is B, and so-on down to node Z. The Parent Table shall therefore look as follows prior to the link failure:

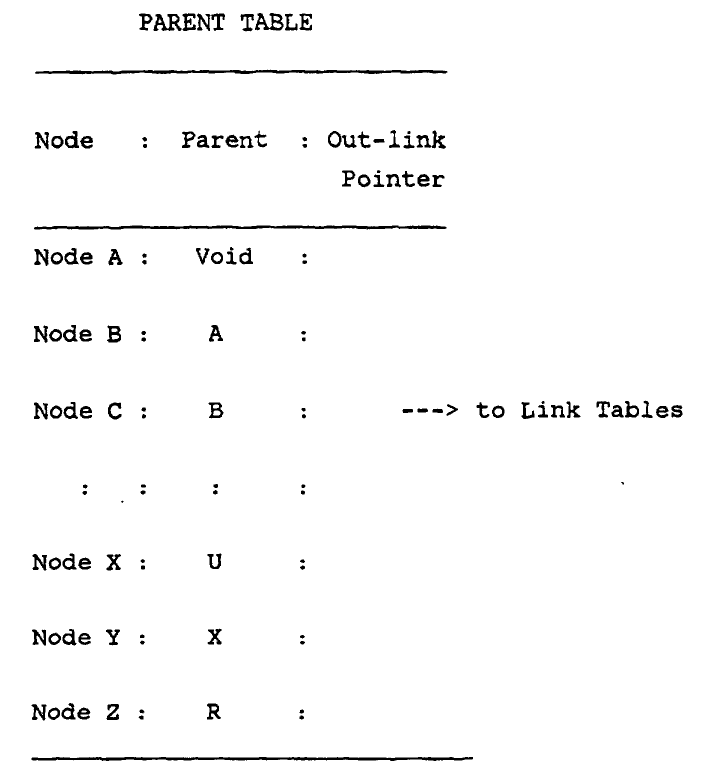

As indicated, the Parent Table also includes an out-link pointer for each Node, said pointer pointing to the links issuing from the considered node (first list), with each link list in turn pointing to a dual link list (second list, third list, etc...)

Let's consider hereunder one example with a first list showing the outlinks from node C, a second list showing the dual list pointed to by CB dual PTR, and a third list pointed to by BA dual PTR.

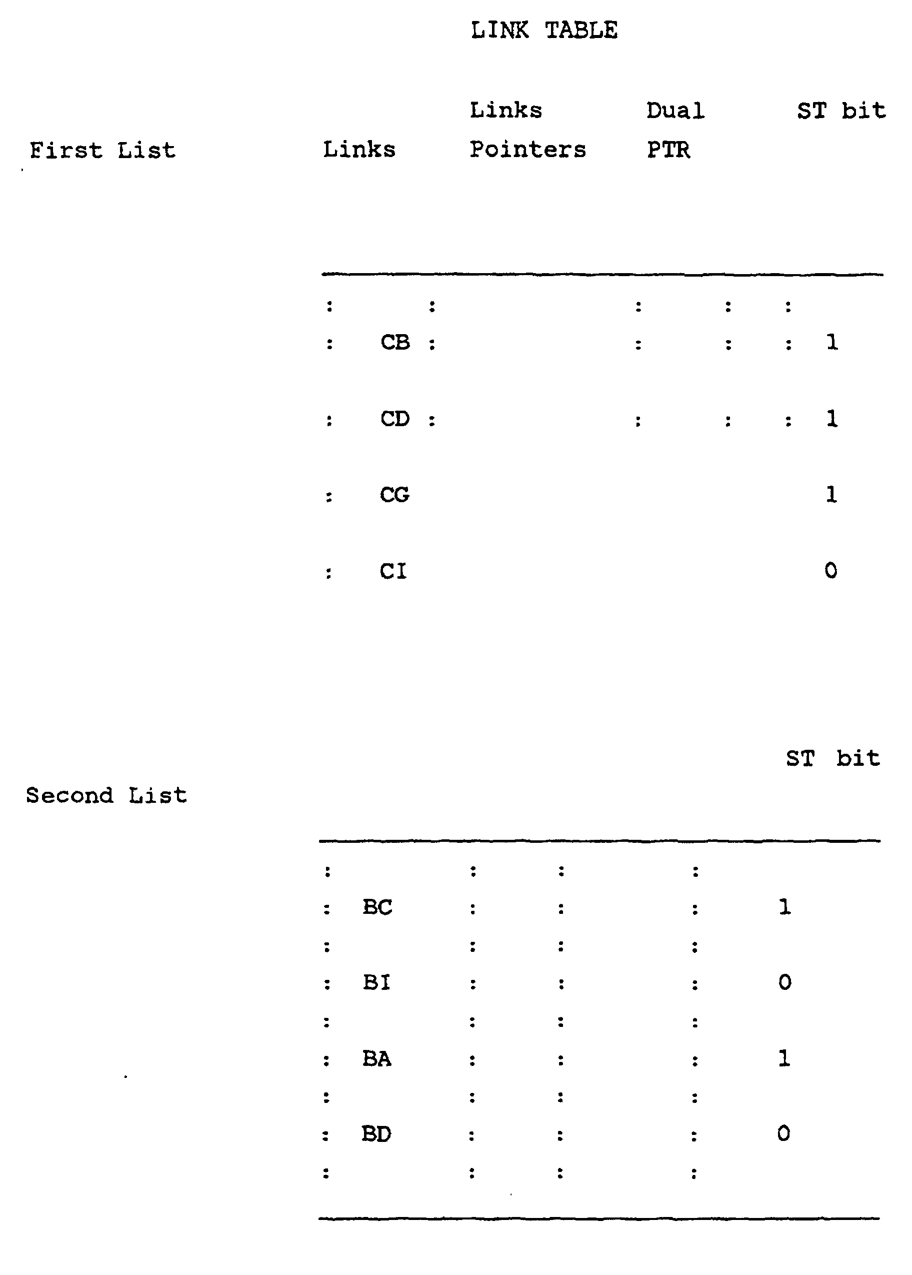

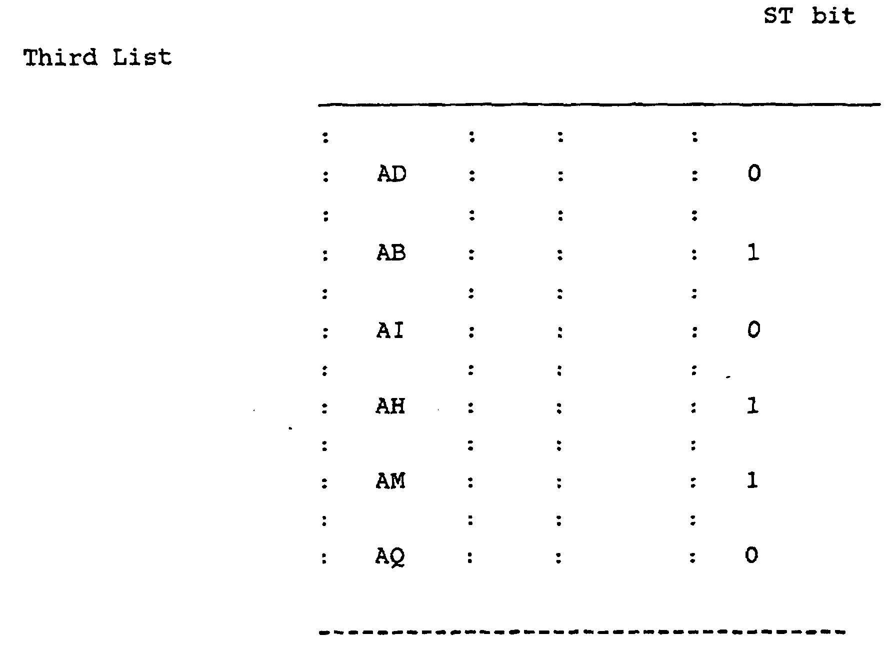

As shown above, the out-link pointer in front of Node C reference, points to the first link list listing including CB, CD, CG and CI, each pointing to the next link (not shown in the above tables). In other words, CB points to CD which in turn points to CG, and so-on until CI. In addition and as mentioned, the first link list includes dual-link pointers pointing to the second link list. For instance, the dual pointer associated with CB in the first link list points to the dual list (or second link list) listing the following links : BC, BI, BA and BD. Each link reference in said second Link List, in turn points third link list, and so on, as shown for link BA dual pointer.

All these link lists are, in practice, combined into a single complex Link Table.

In addition, and this should help in the link failure recovery as mentioned, each link is defined with a one bit reference (i. e. ST) indicating whether the corresponding link is currently on the spanning tree (ST = 1), or off the spanning tree (ST = 0). For instance, for the original tree as represented in figure 2, and for Node C the first Link List shall indicate ST=1 CB, CD, CG and ST=0 for CI.

Once the link BC/CB fails, as mentioned above, Node C, i. e. the child node on the failing edge, becomes a root node for the tree including C, G, D, E and F. Only those links on Tree(C), i. e. CG, CD, DE, EF keep an ST bit equal to binary value 1. The others are reset. The above first table then looks as follows

| Link : | : ST |
|---|---|
| CB : | : 0 |
| CD : | : 1 |
| CG : | : 1 |
| CI : | : 0 |

The Parent Table is also reset to reflect the link failure and tree partitioning.

Given the above information, just by scanning its topology database, and particularly by scanning the Link Table, Node C shall determine the list of links XKn, where Kn is a node belonging to Tree (A). In the example above the list of links CKn, shall only include CB and CI as links not belonging to Tree (C) and therefore potentially usable for interconnecting both Tree (A) and Tree (C).

Since CB is failing, the list of remaining links includes only CI and CI shall be designated for selection. More generally speaking, the list of CKn might include several links. In this case, an additional parameter would be predefined (e. g. highest speed link) to raise the ambiguity and select the link.

Consequently the link selected by Node C is CI. Node C shall start a dialog with node I by sending a so-called "Combine Request" message. Node I shall however respond only after being granted rootship for Tree (A) which should become Tree (I). Node I will only grant the Combine Request upon getting rootship, which is not the case, yet. To avoid waiting indefinitly in case a problem would occur, Node C sets a timer and waits only for the duration of said set time.

Using a similar process (Table resettings, etc...) on Tree (A) will also enable selecting a link to be set between the two partitioned trees. In other words, once receiving the message that link BC failed, the original root (A) scans its topology database to find the list of candidate links KnC where Kn is a node belonging to Tree (A) after the tree split occurred, i. e. the tree including all the network nodes but C, G, D, E, F.

The same link IC among the set of CKn is selected by the root A.

An immediate Move Root may then be implemented from node A to node I by using the fast path determination procedure of this invention as described above (just through parent lists scanning). Node A issues a Move-Root message to node I using the selected path on the Spanning Tree between node A and node I. Then, node I will grant the "Combine Request" message received from Node C over CI and complete the merge process with C. Then the unified spanning tree is redefined according to the process described above, with Node I being the new tree root.

As already mentioned, the present invention should appear to be of particular interest in a number of other situations. For instance to reduce a given spanning tree diameter, or to replace a given low grade (or so-called low weight) link by a higher weighted link. In those instances, the full topology databases available in each node shall appear fairly convenient.

## Claims

1. A data communication network including several nodes interconnected by bi-directionnal links for enabling the transmission of data packets and control data between the nodes, said nodes being at any given moment interconnected into a spanning tree arrangement including a root node and children nodes out-wardly organized in a parent-children relationship, with each node, except the root node, having one single parent node, the spanning tree being **characterized in that** each node is provided with :
means for storing into a so-called topology database including a Parent Table, all the nodes of the tree, with each node, but the root node, pointing to its parent node and to a Link Table via out-link pointer means, said Link Table including dual link pointer means for pointing to respective dual links within said Link Table and means for assigning each link reference with a bit position, or so-called ST bit, indicating whether said link currently participates to the spanning tree or not ;
means for using said Parent Table and Link Table contents for organizing the tree arrangement at will ;
means for dynamically updating the so-called node topology database including said Parent Table and said Link Table upon each spanning tree (re)organization ;
these means being operative during normal operating conditions.

2. A data communication network according to claim 1 in which said means for updating said Parent Table and Link Table upon each spanning tree reorganization includes in each node :
a) means in the considered node for scanning the locally stored Parent Table and Link Table for detecting the first node with no child or so-called terminal node assigning said node the rootship and amending the Tables accordingly ;
b) means for exploring the local node topology database including local Parent Table and Link Table to find the spanning tree links for which the target node is the parent, mark the source nodes with the respective target nodes as parent node, and amend the Tables accordingly;
c) means for iterating the process with the source node as target until all the nodes have got a parent and amend the Tables accordingly, whereby, full parent-child relationships for each node in the considered node database is loaded to define the tree structure.

3. A data communication network as claimed in claims 1 or 2 further including means for performing, upon request, a fast path determination between a so-called source node and a so-called target node both pertaining to the spanning tree, and any node of the spanning tree being able to act as either source node or target node said means including :
means for triggering the source node to scan its stored Parent Table upwardly and store a so-called source-parent-list listing the successive parent nodes upwardly ;
means for triggering the Source node to scan its stored Parent Table and store a target-parent-list upwardly starting with the target node ;
means for reverse scanning both lists and deleting all common nodes but the last;
whereby the path between said source node and said target node is generated by simply concatenating the remaining source-parent list forward and the remaining target parent list backward.

4. A data communication network according to anyone of claims 1 to 3 wherein said Parent Table and said Link Table are combined into a single Link Table.

5. A data communication network as claimed in anyone of claims 1 through 4, further including means for performing, upon any spanning tree link failure splitting and partitioning the original spanning tree into a first tree including the child node of the failing link and all still attached nodes therein and a second tree including the original root and all remaining attached nodes, a fast recovery operation to recombine the partitioned trees into a single tree and redefine the corresponding spanning tree, said fast recovery means including :
a) means for defining said child node of the failing link as root of said first spanning tree ;
b) means, in both the original root and said first tree root for resetting the ST bit within their respective databases to reflect the current tree partitions ;
c) means for scanning the resetted topology database within said first tree root, for listing the links between said first tree root and nodes pertaining to said second tree, for selecting one of said links based on predefined link characteristics to attach both first and second trees together, and for advising the target node on said selected link accordingly ;
d) means for scanning the updated topology database within said second tree root node to select a link between said target node and said first tree root ;
e) means for sending a Move-Root control data from said second tree root to the target node and for completing the trees merge process ; and,
f) means for updating each node topology database accordingly.

6. A method for performing in a network according to anyone of claims 1 through 5, fast spanning tree recovery operations after failure of a tree link IJ, I being the child node and J the parent node of said failing link and R being the root node of the original spanning tree, whereby the original tree is split into two partitions one defined as Part R with R as the corresponding root and the other one defined as Part I with I as its root, said method including :
In node I :
- scanning the node topology database to find and store a list of links IKn where Kn is a node belonging to Part R ;
- selecting in said list a stored link K based on a predefined link criteria ;
- starting a merge process by having said node I sending a so-called Combine Request message to said node K ;
in node R:
- scanning the topology database to find and store a list of links KnI where Kn is a node belonging to Part R ;
- selecting the node KI among the set of Kn nodes based on said predefined link criteria ;
- initiating and sending a Move-Root message to node K, and,
using Node K to complete the merge process, get rootship for the merged tree and reinitiate node topology databases installation using the means as defined in claim 2.

7. A method according to claim 6 wherein said merge process starting operations include starting a timer to set a limit to the validity of the Combine Request message sent to node K.

8. A method according to claims 6 or 7 wherein said Move Root message is sent from node R to node K using fast path determination means made according to claim 3.

9. A method for performing fast spanning tree recovery operations as claimed in claim 6 through 8 using means to synchronize the operations in accordance with the chronology of the link failures, in the case of multiple link failures occurring.

## Patentansprüche

1. Ein Datenübertragungsnetz mit mehreren Knoten, die über bi-direktinale Links verschaltet sind zum Ermöglichen der Übertragung von Datenpaketen und Steuerdaten zwischen den Knoten, wobei die Knoten in jedem gegebenen Augenblick zu einer STB-Baum-Anordnung einschließlich eines Stammknotens und Kinder-Knoten verschaltet sind, die nach auswärts in eine Elter-Kind-Beziehung organisiert sind, wobei jeder Knoten, abgesehen von dem Stammknoten, einen einzigen Eltern-Knoten aufweist,
wobei der STB-Baum **dadurch gekennzeichnet ist, daß** jeder Knoten versehen ist:
mit Speichermitteln zum Abspeichern in eine sogenannte Topologie-Datenbank, die eine Eltern-Tabelle umfaßt, wobei alle Knoten des Baums, abgesehen vom Stammknoten, auf seinen Eltern-Knoten und über ein Aus-Link-Zeigermittel auf eine Link-Tabelle zeigt, die Link-Tabelle ein Dual-Link-Zeigermittel umfaßt zum Zeigen auf entsprechende Dual-Links innerhalb der Link-Tabelle, und mit Mitteln zum Zuweisen jedes Link-Bezugs auf eine Bit-Position, das sogenannten ST-Bit, das anzeigt, ob dieses Link augenblicklich am STB-Baum beteiligt ist oder nicht;
mit Mitteln zum Anwenden der Elter-Tabellen- und Link-Tabellen-Inhalte zum Organisieren der Baumanordnung nach freiem Willen;
mit Mittel zum dynamischen Aktualisieren der Knoten-Topologie-Datenbank einschließlich der Elter-Tabelle und der Link-Tabelle bei jeder STB-Baum (Um)-Organisierung;
diese Mittel bei normalen Betriebsbedingungen operativ sind.

2. Ein Datenübertragungsnetz gemäß Anspruch 1, in dem die Mittel zum aktualisieren der Elterntabelle und der Link-Tabelle bei jeder STB-Baum-Umorganisierung in jedem Knoten enthalten:
a) Mittel im betrachteten Knoten zum Scannen der örtlichen gespeicherten Elterntabelle und Link-Tabelle zum Erfassen des ersten Knotens ohne Kind d.i. des sogenannten Anschlußknotens, unter Zuweisung der Stammknoteneigenschaft an den Knoten und entsprechendem Ergänzen der Tabellen;
b) Mittel zum Durchforschen der örtlichen Knoten-Topologie-Datenbank einschließlich örtlicher Elterntabelle und Link-Tabelle zum Finden der STB-Baum-Links, für die der Bestimmungsknoten der Elter ist, Markieren der Quellknoten mit den entsprechenden Bestimmungsknoten als Elternknoten, und zum entsprechenden Berichtigen der Tabellen;
c) Mittel zum Iterieren des Prozesses mit dem Quellknoten als Bestimmung, bis alle Knoten einen Elter haben, und entsprechendem Berichtigen der Tabellen, wobei volle Elter-Kind-Beziehungen für jeden Knoten in der betrachteten Knotendatenbank geladen werden, um die Baumstruktur zu definieren.

3. Ein Datenübertragungsnetz gemäß Anspruch 1 oder 2, das ferner Mittel beinhaltet zum Durchführen, auf Anforderung, einer Schnellpfadbestimmung zwischen einem sogenannten Quellknoten und einem sogenannten Bestimmungsknoten, die beide zum STB-Baum gehören, und jeder beliebige Knoten auf dem STB-Baum in der Lage ist, entweder als Quellknoten oder als Bestimmungsknoten zu handeln, wobei diese Mittel beinhalten:
Mittel zum Anlaufenlassen des Quellknotens zum Scannen seiner gespeicherten Elterntabelle nach oben, und Abspeichern einer sogenannten Quell-Elternliste, die die aufeinanderfolgenden Elternknoten nach oben auflistet;
Mittel zum Anlaufenlassen des Quellenknotens zum Scannen ihrer gespeicherten Elterntabelle und Speichern einer Bestimmungs-Elternliste, die nach oben mit dem Zielknoten anläuft;
Mittel zum umgekehrten Scannen beider Listen und Löschen aller gemeinsamen Knoten abgesehen von dem letzen;
wobei der Pfad zwischen dem Quellknoten und dem Bestimmungsknoten generiert wird durch einfaches Verketten der restlichen Quell-Eltern-Liste nach vorwärts und der restlichen Bestimmungs-Eltern-Liste nach rückwärts.

4. Ein Datenübertragungsnetz gemäß einem beliebigen der Ansprüche 1 bis 3, in dem die Eltern-Tabelle und die Link-Tabelle zu einer einzigen Link-Tabelle kombiniert sind.

5. Ein Datenübertragungsnetz gemäß einem beliebigen der Ansprüche 1 bis 4, das ferner Mittel enthält zum Durchführen, bei einer STB-Baum-Störung, die den ursprünglichen STB-Baum auseinanderreißt und teilt in einen ersten Baum einschließlich des Kindknotens des gestörten Links und aller darin noch angehängten Knoten, und einen zweiten Baum, einschließlich des ursprünglichen Stammknotens und aller noch vorhandener angehängter Knoten, einer schnelle Beseitigungsoperation zum Neukombinieren des partitionierten Baums zu einem einzigen Baum, und Neudefinieren des entsprechenden STB-Baums, wobei das Schnellbehebungsmittel aufweist:
a) Mittel zum Definieren des Kindknotens des gestörten Links als Stammknoten des ersten STB-Baums;
b) Mittel, sowohl im ursprünglichen Stammknoten als auch im Stammknoten ersten Baums zum Rücksetzen des ST-Bits innerhalb der entsprechenden Datenbanken, um die augenblickliche Baum-Partition wiederzuspiegeln;
c) Mittel zum Durchsuchen der zurückgesetzten Topologie-Datenbanken innerhalb des Stammknotens des ersten Baums, zum Auflisten der Links zwischen dem Stammknoten des ersten Baums und den Knoten, die zum zweiten Baum gehören, zum Auswählen eines der genannten Links auf der Grundlage vorgegebener Verbindungsmerkmale zum Zusammenhängen des ersten und des zweiten Baums, und zum entsprechenden Unterrichten des Zielknotens auf dem gewählten Link;
d) Mittel zum Durchsuchen der aktualisierten Topologie-Datenbank innerhalb des Stammknotens des zweiten Baums, um ein Link zwischen dem Bestimmungsknoten und dem Stammknoten des ersten Baums auszuwählen;
e) Mittel zum Senden von Move-Root-Steuerdaten von vom Stammknoten des zweiten Baums an den Bestimmungsknoten und zum Vervollständigen des Baumverbindungsprozesses; und
f) Mittel zum entsprechenden Aktualisieren jeder Knoten-Topologie-Datenbasis.

6. Ein Verfahren zum Durchführen, in einem Netzwerk gemäß einem beliebigen der Ansprüche 1 bis 5, von Schnell-STB-Baum-Störungsbehebungsoperationen nach einer Störung eines Baum-Links IJ, wobei I der Kind-Knoten und J der Elternknoten des gestörten Links ist, und R der Stammknoten des ursprünglichen STB-Baums ist, wobei der ursprüngliche Baum in zwei Partitionen geteilt ist, die definiert sind als Teil R mit R als dem entsprechenden Stammknoten, und der andere als Teil I mit I als Stammknoten definiert ist, und das Verfahren beinhaltet:
Im Knoten I:
- Durchsuchen der Knoten-Topologie-Datenbasis zum Finden und Speichern einer Liste Links IKn, wobei Kn ein Knoten ist, der zum Teil R gehört;
- Auswählen eines gespeicherten Links K in der Liste auf der Grundlage eines vordefinierten Link-Kriteriums;
- Starten eines Verschmelzungsprozesses durch Veranlassen, daß der Knoten I eine sogenannte "Combine Request"-Meldung an den Knoten K schickt;
im Knoten R:
- Durchsuchen der Topologie-Datenbank zum Finden und Speichern einer Liste von Links KnI, wobei Kn ein Knoten ist, der zum Teil R gehört;
- Auswählen des Knotens KI unter dem Satz Knoten Kn auf der Grundlage der vordefinierten Link-Kriterien;
- Einleiten und Senden einer "Move-Root"-Meldung an den Knoten K;
Benutzen des Knotens K zum Komplettieren des Vereinigungsprozesses, um die Stammknoteneigenschaft für den vereinigten Baum zu erhalten, und Neuinitiieren der Topologie-Datenbanken-Installation durch Anwenden der Mittel gemäß Definition in Anspruch 2.

7. Ein Verfahren gemäß Anspruch 6, in dem die Vereinigungsprozeß-Startoperationen das Anlaufenlassen eines Zeitgeber zum Setzen einer Grenze für die Gültigkeit der an den Knoten K gesendeten "Combine Request"-Meldung beinhalten.

8. Ein Verfahren gemäß Anspruch 6 oder 7, in dem die "Move Root"-Meldung vom Knoten R an den Knoten K unter Verwendung gemäß Anspruch 3 gemachter schneller Pfadbestimmungsmittel gesendet wird.

9. Ein Verfahren zum Durchführen von Schnell-STB-Baum-Wiederherstellingsoperationen gemäß Anspruch 6 bis 8 unter Verwendung von Mitteln zum Synchronisieren der Operationen gemäß der Chronologie der Link-Störungen im Falle von auftretenden Mehrfach-Link-Störungen.

## Revendications

1. Réseau de communications de données comprenant plusieurs noeuds interconnectés par des liaisons bidirectionnelles destinées à permettre la transmission de paquets de données et de données de commande entre les noeuds, lesdits noeuds étant à un moment quelconque donné interconnectés en un agencement d'arborescence en extension comprenant un noeud racine et des noeuds enfant organisés vers l'extérieur selon une relation parent -enfant, chaque noeud, à l'exception du noeud racine, comportant un seul noeud parent, l'arborescence en extension étant **caractérisée en ce que** chaque noeud est muni de :
un moyen destiné à mémoriser dans ce que l'on appelle une base de données de topologie comprenant une table des parents, tous les noeuds de l'arborescence, chaque noeud, sauf le noeud racine, pointant sur son noeud parent et sur une table de liaisons par l'intermédiaire du moyen de pointeur de liaison sortante, ladite table de liaisons comprenant des doubles moyens de pointeurs de liaisons destinés à pointer sur des doubles liaisons respectives à l'intérieur de ladite table de liaisons et un moyen destiné à affecter à chaque référence de liaison une position d'un bit, soit ce que l'on appelle le bit ST, indiquant si la liaison participe actuellement à l'arborescence en extension ou non,
un moyen destiné à utiliser les contenus de ladite table de parents et de la table de liaisons pour organiser l'agencement de l'arborescence à volonté,
un moyen destiné à mettre à jour dynamiquement ce que l'on appelle la base de données de topologie des noeuds y compris ladite table de parents et ladite table de liaisons lors de chaque organisation ou réorganisation de l'arborescence en extension,
ces moyens étant fonctionnels durant des conditions d'exploitation normales.

2. Réseau de communications de données selon la revendication 1, dans lequel ledit moyen destiné à mettre à jour ladite table de parents et ladite table de liaisons lors de chaque réorganisation de l'arborescence en extension comprend dans chaque noeud :
a) un moyen dans le noeud considéré pour explorer la table de parents et la table de liaisons mémorisées localement afin de détecter le premier noeud sans enfant ou bien ce que l'on appelle un noeud terminal en affectant audit noeud la propriété d'une racine et en corrigeant les tables en conséquence,
b) un moyen destiné à explorer la base de données de topologie des noeuds locaux comprenant la table de parents locale et la table de liaisons locale pour trouver les liaisons de l'arborescence en extension pour lesquelles le noeud cible est le noeud parent, repérer les noeuds source avec les noeuds cibles respectifs en tant que noeud parent, et corriger les tables en conséquence,
c) un moyen destiné à effectuer une itération du traitement avec le noeud source en tant que cible jusqu'à ce que tous les noeuds aient obtenu un parent et corriger les tables en conséquence, d'où il résulte que des relations parent-enfant complètes pour chaque noeud dans la base de données des noeuds considérée sont chargées pour définir la structure de l'arborescence.

3. Réseau de communications de données selon la revendication 1 ou 2, comprenant en outre un moyen destiné à exécuter, sur demande, une détermination d'un cheminement rapide entre ce que l'on appelle un noeud source et ce que l'on appelle un noeud cible se rapportant tous deux à l'arborescence en extension, et un noeud quelconque de l'arborescence en extension pouvant agir soit comme noeud source soit comme noeud cible, ledit moyen comprenant :
un moyen destiné à déclencher le noeud source pour explorer sa table de parents mémorisée vers le haut et mémoriser ce que l'on appelle une liste source -parent donnant la liste des noeuds parent successifs vers le haut,
un moyen destiné à déclencher le noeud source pour explorer sa table de parents mémorisée et mémoriser une liste cible -parent vers le haut en commençant par le noeud cible,
un moyen destiné à explorer en sens inverse les deux listes et à supprimer tous les noeuds communs sauf le dernier,
d'où il résulte que le cheminement entre ledit noeud source et ledit noeud cible est généré en concaténant simplement la liste source-parent restante vers l'avant et la liste cible-parent restante vers l'arrière.

4. Réseau de communications de données selon l'une quelconque des revendications 1 à 3, dans lequel ladite table de parents et ladite table de liaisons sont combinées en une seule table de liaisons.

5. Réseau de communications de données selon l'une quelconque des revendications 1 à 4, comprenant en outre un moyen destiné à exécuter, lors d'une défaillance d'une liaison quelconque de l'arborescence en extension la séparation et la segmentation de l'arborescence en extension d'origine en une première arborescence comprenant le noeud enfant de la liaison défaillante et tous les noeuds encore rattachés à celui-ci et une seconde arborescence comprenant la racine d'origine et tous les noeuds rattachés restants, une opération de récupération rapide destinée à recombiner les arborescences segmentées en une seule arborescence et à redéfinir l'arborescence en extension correspondante, ledit moyen de récupération rapide comprenant :
a) un moyen destiné à définir ledit noeud enfant de la liaison défaillante en tant que racine de ladite première arborescence en extension,
b) un moyen, à la fois dans la racine d'origine et ladite racine de la première arborescence pour réinitialiser le bit ST à l'intérieur de leurs bases de données respectives afin de refléter les segmentations des arborescences en cours,
c) un moyen destiné à explorer la base de données de topologie réinitialisée à l'intérieur de ladite racine de la première arborescence, afin d'établir la liste des liaisons entre ladite racine de la première arborescence et des noeuds se rapportant à ladite seconde arborescence, afin de sélectionner l'une desdites liaisons sur la base de caractéristiques de liaisons prédéfinies afin de rattacher ensemble à la fois les première et seconde arborescences, et destiné à en aviser le noeud cible en conséquence sur ladite liaison sélectionnée,
d) un moyen destiné à explorer la base de données de topologie mise à jour à l'intérieur dudit noeud racine de la seconde arborescence afin de sélectionner une liaison entre ledit noeud cible et ladite racine de la première arborescence,
e) un moyen destiné à émettre des données de commande de déplacement de racine depuis ladite racine de la seconde arborescence vers le noeud cible et destiné à terminer le traitement de fusion des arborescences, et
f) un moyen destiné à mettre à jour en conséquence chaque base de données de topologie de noeud.

6. Procédé destiné à exécuter dans un réseau selon l'une quelconque des revendications 1 à 5, des opérations de récupération d'arborescence en extension rapide après la défaillance d'une liaison de l'arborescence U, I représentant le noeud enfant et J le noeud parent de ladite liaison défaillante et R représentant le noeud racine de l'arborescence en extension d'origine, d'où il résulte que l'arborescence d'origine est séparée en deux segmentations, l'une définie comme étant la partie R, avec R en tant que racine correspondante et l'autre étant définie en tant que partie I avec I en tant que sa racine, ledit procédé comprenant :
Dans le noeud **I** :
- l'exploration de la base de données de topologie du noeud pour trouver et mémoriser une liste des liaisons IKn où Kn est un noeud appartenant à la partie **R**,
- la sélection dans ladite liste d'une liaison mémorisée **K** sur la base d'un critère de liaison prédéfini,
- le lancement d'un traitement de fusion en faisant émettre par ledit noeud **I** ce que l'on appelle un message de demande de combinaison vers ledit noeud **K**,
dans le noeud **R** :
- l'exploration de la base de données de topologie pour trouver et mémoriser une liste des liaisons KnI où Kn est un noeud appartenant à la partie **R**,
- la sélection du noeud KI parmi l'ensemble des noeuds Kn sur la base desdits critères de liaison prédéfinis,
- le lancement et l'émission d'un message de déplacement de racine vers un noeud **K**, et,
l'utilisation d'un noeud **K** pour terminer le traitement de fusion, obtenir la propriété de racine pour l'arborescence fusionnée et relancer l'installation des bases de données de topologie des noeuds en utilisant le moyen qui est défini dans la revendication 2.

7. Procédé selon la revendication 6, dans lequel lesdites opérations de début de traitement de fusion comprennent le lancement d'un temporisateur pour établir une limite à la validité du message de demande de combinaison émis vers le noeud K.

8. Procédé selon la revendication 6 ou 7, dans lequel ledit message de déplacement de racine est émis depuis le noeud R vers le noeud K en utilisant un moyen de détermination de cheminement rapide effectué selon la revendication 3.

9. Procédé destiné à exécuter des opérations de récupération d'arborescence en extension rapide selon les revendications 6 à 8 en utilisant un moyen destiné à synchroniser les opérations conformément à la chronologie des défaillances des liaisons dans le cas de l'apparition de défaillances de liaisons multiples.
